(19) 

Europäisches
Patentamt
European
Patent Office
Office européen
des brevets

(11)  **EP 1 783 174 B1**

(12)  **EUROPEAN PATENT SPECIFICATION**

(45) Date of publication and mention
of the grant of the patent:
**07.03.2012 Bulletin 2012/10**

(51) Int Cl.:
***C08L 95/00*** *(2006.01)*

(21) Application number: **05110339.8**

(22) Date of filing: **04.11.2005**

(54) **Binder composition comprising a low viscosity naphthenic oil for coloured hot-mix asphalt applications**

Bindemittelzusammensetzung enthaltend ein naphthenisches Öl mit niedriger Viskosität für gefärbte Asphalt-Heissmischgut-Anwendungen

Composition de liant comprenant un huile naphthénique à basse viscosité pour une composition asphaltique, mélangée à chaud et colorée

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**09.05.2007 Bulletin 2007/19**

(73) Proprietor: **Latexfalt B.V.**
**2396 AP Koudekerk a/d Rijn (NL)**

(72) Inventors:
• **Ruiter, Wilhelmina Evelien**
**3511 AB, Utrecht (NL)**
• **Lommerts, Bert Jan**
**1703 RB, Heerhugowaard (NL)**

(74) Representative: **van Westenbrugge, Andries et al**
**Nederlandsch Octrooibureau**
**Postbus 29720**
**2502 LS Den Haag (NL)**

(56) References cited:
**GB-A- 1 097 794     GB-A- 2 117 429**
**US-A- 5 484 477**

• **PATENT ABSTRACTS OF JAPAN vol. 018, no. 686 (C-1292), 26 December 1994 (1994-12-26) & JP 06 271790 A (COSMO SOGO KENKYUSHO:KK; others: 01), 27 September 1994 (1994-09-27)**

Remarks:
The file contains technical information submitted after the application was filed and not included in this specification

**Description**

The present invention relates to a binder composition comprising (a) an oil having a relatively low viscosity and high naphthene content and (b) a resin, said binder composition showing a relatively high Ring & Ball softening point according to ASTM E 28 and a relatively high PEN value according to ASTM D 5. The binder composition according to the present invention has in particular a low colour, i.e. a colour of less than 100,000 APHA as determined according to ASTM 5386.

**Technical field**

Various techniques are presently used in Europe to produce coloured asphalt pavements for bicycle lanes, footpath, bus lanes and the like. One of the techniques is to add dyes or pigments to regular (black) bitumen binders. However, the results are often unsatisfactory because either high amounts of pigment have to be used to create a satisfactory degree of colouration or the colour is not homogeneous and fades rapidly in time. Moreover, it appears that it is impossible to produce more bright colours when the hot-mix contains regular black bitumen, i.e. a bitumen with a relatively high asphaltene content. Therefore, new feed stocks and techniques are commercially available to produce coloured asphalt, e.g. synthetic paints, coloured slurry seal (for example based on Latexfalt® Microdeck Colour emulsion) or coloured hot-mix binders (for example Mexphalte® C of Shell and Kromatis® of Total).

As the area to pave with asphalt is often relatively large, the price-performance of a certain technology is of paramount importance for a successful market introduction. In this respect, the performance is defined as the functional performance of a certain technique over it's entire service life. Secondly, safety aspects of the pavement are crucial and one of the predominant requirements are the anti-skid properties of a certain pavement. Therefore, synthetic paints are less favourable compared to other alternatives as the surface texture is often too smooth resulting in a slippery surface, in particular under wet conditions. Furthermore, health, safety and environmental impact of a certain technology becomes increasingly important and the requirements and restrictions are continuously increasing in time. The use of volatile organic solvents or the use of aromatic compounds, for example, should be restricted as much as possible.

Nowadays, in the Netherlands the coloured hot-mix application has gained the largest market share for binder materials of all technologies available. However, synthetic paints and clear binder emulsions (coloured micro surfacing) have gained a sizeable market share as well. The process technology to produce the coloured hot-mix asphalt is almost similar to regular asphalt production. The most important difference is the substitution of the bitumen binder by a clear binder which can easily be pigmented by using only a low amount of pigment. In the Netherlands an iron oxide based pigment is often used to produce a terra-cotta like red coloured pavement. But green, yellow and blue colours are commercialised as well.

Common feed stocks for clear binders are petroleum resins and high viscous petroleum oils such as Bright Stocks. These materials can simply be modified using various kinds of elastomers. The petroleum oil is by far the cheapest component in the mix and a further increase of the oil content will lower the cost price of the product. However, the lower the required penetration of the mixture or the higher the required Ring & Ball temperature, the higher the petroleum resin concentration has to be which is the most expensive component. Hence, more temperature stable mixtures have a significantly higher cost price than the softer mixtures.

GB 1.097.794 of Esso Research and Engineering Company, published 3 January 1968, discloses a binder composition comprising a petroleum resin and a deasphalted, undewaxed Coastal residual naphthenic oil having a Saybolt viscosity of 210 - 222 SSU at 210°C (about 45 cSt. at 100°C), wherein the weight ratio of binder to oil is about 1.8 : 1.

JP 06-271790 A of Cosmo Sogo Kenkyusho KK, published 26 December 1994, discloses a binder composition containing 20 - 60 wt.% of a hydrocarbon resin and 30 - 70 wt.% of an oil, said oil being an aromatic oil or a naphthenic oil extracted with a solvent from a lubricating oil fraction.

GB B 1.226.234 of Shell, published 24 March 1971, discloses resin-oil blends (cf. Table III) comprising 58 - 30 percent by weight of resin and 42 - 61 percent by weight of oil. The resin is either a coumarone-indene resin prepared by polymerisation of an unsaturated coal tar fraction (resin R1) or a resin prepared by polymerisation of unsaturated petroleum hydrocarbons (resin R2). The oil is a vacuum distillate having a low aromatics content (oil F1) or an aromatic extract obtained by solvent extraction of a deasphalted vacuum residue (oil F2). The aromatic content of the resins and the oils are characterised by an aromaticity index $f_a$. Table III shows that increasing the amount of oil F1 (decrease of aromaticity index $f_a$) in oil/resin blends at constant oil/resin R2 ratio results in a decrease of the Ring & Ball softening point (cf. Exp. 11, 13 and 15). Hence, GB B 1.226.234 teaches that lowering the aromatics content of an oil fraction in these oil/resin blends results in a lower Ring & Ball softening point and that the Ring & Ball softening point can be maintained at a certain value by increasing the amount of resin (cf. for example Exp. 5, 7 and 9 in Table III).

EP A 179.510 of Shell, published 30 April 1986, discloses a pigmentable binder composition comprising a mineral lubricating oil, a petroleum resin and/or a coumarone resin, wherein the petroleum resin and/or the coumarone resin comprises carboxylic acid, carboxylic anhydride or hydroxy groups (modified hydrocarbon resin). The oil is preferably solvent extracted Bright Stock, i.e. an aromatic oil. Such oils are often abbreviated as BFE.

US 4.629.754 of Shell, issue date 16 December 1986, discloses a pigmentable binder composition comprising a mineral lubricating oil, a modified resin as disclosed in EP A 179.510 and a fatty acid lithium salt. The oil is preferably an extract obtained by furfural extraction of Bright Stock, i.e. an aromatic oil.

DE A 3.635.283 of Bayerische Asphalt-Mischwerke GmbH & Co., published 28 April 1988, discloses a binder composition that can be pigmented, wherein the binder composition comprises an oil and a thermoplastic resin and/or a hydrocarbon resin, wherein the oil may be an aromatic oil, an naphthenic oil, a paraffinic oil or a mixture thereof. The examples disclose the use of aromatic oils thereby indicating that aromatic oils are the preferred material of choice.

EP A 330.281 of Shell, published 30 August 1989, discloses a pigmentable binder composition comprising a mineral lubricating oil, a modified hydrocarbon resin as disclosed in EP A 179.510 and an amorphous homopolymer or copolymer of an α-olefin. Suitable mineral lubricating oils include solvent extracted Bright Stock.

US 5.484.477 of the Minnesota Mining and Manufacturing Company, issue date 16 January 1996, discloses a coatable composition comprising an organic oil and a tackifier, wherein the tackifier comprises an organic material having a $T_g$ of at least 120°C and an amount of naphthenic oil such that the tackifier has a kinematic viscosity of 3,000 - 5,000 cSt (100°C). In this patent specification, the term "coatable" means that the viscosity of the composition is such that allows spraying or coating of aggregate material. The naphthenic oils are used as a diluent. The organic material component of the tackifier comprises polyalkylene resins and polycycloalkylene resins including aromatic resins. A particular preferred tackifier consists of ethylene-propylene-1,4-hexadiene terpolymer and a light-coloured naphthenic oil (colour of less than 4 according to ASTM D 1500). According to US 5.484.477, naphthenic oils are preferably used because they do not require hazard labelling during shipping.

FR A 2.765.229 of Mobil Oil Française, published 31 December 1998, discloses a binder composition having a low colour that comprises 40 - 90 percent by weight of an oil and 10-40 percent by weight of resins and waxes, wherein the latter comprises 3-40 percent by weight of waxes having a melting temperature of more than 100°C. The oil may be a paraffinic oil, a naphthenic oil or an aromatic oil, wherein the oil preferably has a viscosity of more than 100 mm²/s at 40°C and more than 30 mm²/s at 100°C (according to ASTM D 445). The examples disclose the use of aromatic oils indicating that aromatic oils are the preferred material of choice.

JP A 2003-20647 of Showa Shell, published 26 July 2002, discloses a colourable binder composition comprising an oil having a kinematic viscosity of 10 - 40 cSt and a total aromatics and naphthenes content of less than 40 percent by weight, a hydrogenated petroleum resin and a hydrogenated thermoplastic elastomer. An example for the oils is a lubricating base oil having a kinematic viscosity (100°C) of 33 cSt, an aromatics content of 5 wt.%, a naphthene content of 27 wt.% and a paraffin content of 68 wt.%, i.e. a paraffinic oil. Another example, although not according to the invention disclosed in JP A 2003-20647, is an oil having a kinematic viscosity (100°C) of 68 cSt, an aromatics content of 33 wt. %, a naphthene content of 26 wt.% and a paraffin content of 41 wt.%.

WO 03/062315 of Shell, published 31 July 2003, discloses a pigmentable binder composition comprising a resin, a lubricating oil or an extract thereof and an amide additive. Preferably, the resin is a modified resin as disclosed in EP A 179.510. The lubricating oil or the extract thereof may be all kinds of oils including vegetable oils, although it is preferred that the oil is a furfural extracted Bright Stock, i.e. an aromatic oil.

EP A 1.473.327 of Kraton Polymers B.V., published 3 November 2004, discloses a colourable composition comprising a bitumen-like compound comprising a hydrogenated petroleum resin and an oil, wherein the oils is preferably an oil as disclosed in JP A 2002-206047.

The present invention makes use of a particular group of oils which has a lower viscosity and a lower aromatics content than the petroleum oils such as furfural extracted Bright Stock presently used in commercial mixtures. However, despite the low viscosity and, without being bound by theory, presumably also the relatively low aromatics content, of the oil the required amount of petroleum resin required to achieve a certain penetration or Ring & Ball temperature is surprisingly significantly less than for its more viscous aromatic counterparts. Furthermore the mixtures as described in this invention are significantly more clear and transparent than commercially available materials that enables the use of lower amounts of pigment in asphalt compositions. Additionally, the colouring will be more homogeneous and reproducibility of the manufacture of asphalt batches is improved.

The low viscosity makes it easier to process the oil and to dissolve a certain amount of petroleum resin or polymer in the oil. Hence, processability and workability are significantly improved when the oil of the present invention is used.

## Summary of the invention

The present invention relates therefore to an essential colourless binder composition comprising a naphthenic oil having a total content of naphthenics of 35 % - 80 % by weight, based on the total weight of the naphthenic oil, and a petroleum or synthetic hydrocarbon resin, wherein the ratio of the naphthenic oil and the petroleum or synthetic hydrocarbon resin is between 10 : 90 to 90 : 10, wherein the naphthenic oil has a colour of less than 100,000 APHA as determined according to ASTM 5386. The present invention further relates to the use of the essential colourless binder compositions in coloured asphalt compositions and emulsions, in particular emulsions for slurry seal and microsurfacing.

## Detailed description of the invention

### The naphthenic oil

According to the invention, it is preferred that the naphthenic oil has a total content of naphthenics of at least 38 % by weight. More preferably, the naphthenic content of the oil is at least 40 % by weight and most preferably at least 42 % by weight, based on the total weight of the naphthenic oil. The upper limit of the naphthenic content is 80 % by weight, preferably 75 % by weight and most preferably 70 % by weight, based on the total weight of the naphthenic oil. The oil has preferably a total content of aromatics of less than 30 % by weight, more preferably less that 25 % by weight, even more preferably less than 20 % by weight and most preferably less than 18 % by weight, based on the total weight of the naphthenic oil. The remainder of the oil comprises paraffins as main component. It is also preferred according to the invention that the naphthenic oil has a total content of aromatics of more than 1 % by weight, more preferably more than 5 % by weight and most preferably more than 10 % by weight, based on the total weight of the naphthenic oil. A suitable oil according to the invention is T 4000 that is produced by a subsidiary ofNynas.

The naphthenic oil has preferably a kinematic viscosity (100°C) of 20 - 150 cSt according to ASTM D 445, more preferably of 25 - 120 cSt and most preferably of 30 - 100 cSt

The naphthenic oil further comprises polyaromatics and the content thereof is preferably less than 10 % by weight, more preferably less than 5 % by weight. Sulphur content is also relatively low. It is preferred that the sulphur content according to ASTM D 323 is below 5 % by weight, more preferably below 2.5 % by weight and most preferably below 1.0 % by weight. All these data are based on the total weight of the oil.

The naphthenic oil according to the invention is very light in colour. Accordingly, it is preferred that the naphthenic oil has a colour of less than 100,000 APHA as determined according to ASTM 5386, more preferably less than 50,000 APHA. Such clear and transparent oils enable the use of amounts of pigment that are less than usual, e.g. 1.5 wt.%. For example, if an oil based on an extract obtained by furfural extraction of a Bright Stock (which has usually a colour of more than 100,000 APHA), the amount of pigment must be at least 2 wt.%.

### The petroleum or synthetic hydrocarbon resin

According to the invention, it is preferred that the petroleum or synthetic hydrocarbon resin is a petroleum resin, wherein the petroleum resin is preferably selected from the group consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics and terpene-based resins. Petroleum resins are generally manufactured by polymerisation of unsaturated hydrocarbons that are present in fractions produced in thermal cracking processes and pyrolysis reactions of hydrocarbon fractions. Optionally such resins may be post-reacted with hydrogen. Coumaron-indene resins are already known for a considerable period of time and are manufactured by polymerisation of unsaturated hydrocarbons that are present in coal tar distillates. Modified petroleum resins are also well known in the art and are for example manufactured by polymerisation of unsaturated hydrocarbons and unsaturated carboxylic acids or unsaturated carboxylic acid anhydrides such as maleic acid anhydride. Another well known process for manufacturing modified petroleum resins involves grafting techniques. Cyclopentadiene-based resins are generally manufactured by polymerising cyclopentadiene-dimer. Terpene resins are manufactured by polymerisation terpenes, usually monoterpenes that are naturally occurring hydrocarbons and which are usually obtained as byproducts of the paper and citrus industries. For these manufacturing processes, reference is made to EP A 179.510, US 4.629.754, EP A 330.281, WO 2004/096915, WO 03/062315 and Kirk-Othmer, Encyclopedia of Chemical Technology, 4th. Ed., Vol. 13, pages 717 - 743 (1991).

More preferably, the petroleum resin is a C5 - C9 petroleum resin, a C9 - petroleum resin or a C5 - petroleum resin, most preferably a C9 - petroleum resin. Suitable resins include Necires® and Nevchem® resins.

### The essential colourless binder composition

The essential colourless binder composition according to the present invention has very advantageous properties over binder compositions known in the art. In particular, binder compositions comprising commonly used oils such as Shell BFE and Plaxolene® 50 of Total have high viscosities thereby having poor handleability whereas the binder compositions according to the present invention have low viscosity. In addition, the oils that are used in the essential colourless binder compositions according to the present invention have a low colour as determined by the APHA-measurements, so that lower amounts of pigments are required to obtain sufficient colour. Furthermore, the binder compositions according to the present invention have Ring & Ball softening points as determined according to ASTM E 28 and PEN values determined according to ASTM D 5 that are on a par or that are even improved when compared with those of conventional systems based on e.g. Shell BFE and Plaxolene® 50 of Total.

Ring & Ball softening points of the binder compositions according to the present invention fulfil the following equation:

$$\frac{1}{T_{R\&BComp.}} = 0.0011 * x_{oil} + 0.024(r^2 > 0.99)$$

wherein $T_{R\&BComp.}$ is the Ring & Ball softening point of the compositions according to the Examples and $x_{oil}$ is the weight fraction of the oil in the compositions. This equation can be rewritten as:

$$\frac{1}{T_{R\&BComp}} = \frac{x_{resin}}{T_{R\&BResin}} + \frac{x_{oil}}{T_{App.R\&BOil}}$$

wherein $T_{R\&BComp.}$ is as defined above, $T_{R\&BResin}$ is the Ring & Ball softening point of the pure resin, $T_{App.R\&BOil}$ is the apparent Ring & Ball softening point of the oil, $x_{oil}$ is as defined above and $x_{resin}$ is the weight fraction of the resin in the composition.. The apparent Ring & Ball softening point of the oil is here defined as a measure of the hardening effect of the composition whereas the viscosity of the oil is a measure for the handleability of the composition. The essential colourless binder composition according to the present invention can then for $0.01 < x_{oil} < 0.8$ be characterised by a ratio of the apparent Ring & Ball softening point of the oil according to ASTM E 28 and the kinematic viscosity (100°C) of the oil according to ASTM D 445 of greater than 6.5 °C.cSt$^{-1}$, preferably greater than 7.5 °C.cSt$^{-1}$, even more preferably greater than 8.5 °C.cSt$^{-1}$ and most preferably greater than 9.5 °C.cSt$^{-1}$.

The essential colourless binder composition according to the invention is in particular suitable for the use in a coloured asphalt composition and in emulsions. Such coloured asphalt compositions are well known in the art. The coloured asphalt composition according to the present invention has preferably a Ring & Ball softening point of at least 28°C according to ASTM E 28, more preferably at least 30°C and most preferably at least 40°C. The coloured asphalt composition according to the present invention has preferably also a PEN value of 1 - 500 (10$^{-1}$ mm at 25 °C) according to ASTM D 5, preferably 5 - 400. The coloured asphalt compositions comprise 1 to 15 wt.%, preferably 2 to 12 wt.%, based on the total weight of the composition, of the essential colourless binder composition according to the present invention. Optionally, but preferably, the coloured asphalt composition further comprises a synthetic polymer.

The emulsions according to the present invention are water-born emulsions having a water content of 23 - 75 wt.%, preferably 25 - 70 wt.% and more preferably 30 - 70 wt.%, wherein the non-aqueous part of the emulsion comprises at least 60 wt.%, preferably at least 70 wt.%, of the essential colourless binder composition, calculated on the total weight of the emulsion. Preferably, the non-aqueous part comprises not more than 99 wt.% of the essential colourless binder composition. The emulsion according to the present invention may be anionic, cationic or non-ionic, but is preferably anionic.

**Examples**

**Example 1**

APHA colour measurements were performed on the following oils according to ASTM 5386. The solvent used was hexane and data were recalculated to their original values (directly proportional).

Table 1

| Oil | APHA (ASTM 5386) |
|---|---|
| Nynas T 4000 | 4100 |
| Shell BFE | 135100 |

**Example 2**

The following oils were used for the preparation of binder compositions (cf. Table 2).

Table 2

| Property | Nynas T 4000 | Shell BFE | Plaxolene® 50 |
|---|---|---|---|
| Paraffinics (wt. %; ASTM D 2140) | 39 | 56 | 32 |
| Naphthenics (wt. %; ASTM D 2140) | 44 | 16 | 32 |
| Aromatics (wt. %; ASTM D 2140) | 17 | 25 | 36 |
| Polyaromatics (wt. %; IP 345) | < 3 | 2-4 | 0 |
| Viscosity (100°C, ASTM D 445) | 40 | 65 | 73 |

The following resins were used for the preparation of the binder compositions (cf. Table 3).

Table 3

| Property | Necires® 2338 | Nevchem® NL 140 | Necires® LX |
|---|---|---|---|
| Type | Maleic anhydride modified resin | Non-modified resin | Non-modified resin comprising phenolic OH groups |
| R&B (°C; ASTM E 28) | 138 | 141 | 138 |
| Density (g/cm3; ASTM D 70) | 1.10 | 1.07 | 1.10 |
| Colour (Gardner; ASTM D 1544) | 8 | 9 | 13 |
| Viscosity (55 wt.%, Pa.s; 160°C; Haake Rheometer, 10 rpm) | 523.44 | 299.28 | 583.73 |

The following compositions were evaluated with respect to viscosity (Pa.s; Haake Rheometer, 160°C, 10 rpm), Ring & Ball softening point (ASTM E 28), PEN value (ASTM D 5). (cf. Tables 3, 4 and 5).

Table 3 (Viscosity data; Pa.s)
oil/resin ratio

| oil | resin | 30/70 | 40/60 | 50/50 | 60/40 | 65/45 | 70/30 | 80/20 |
|---|---|---|---|---|---|---|---|---|
| BFE | 2338 | 1,40 | 0,65 | 0,25 | 0,12 | 0,10 | 0,07 | 0,04 |
| T4000 | 2338 | 2,24 | 0,62 | 0,23 | 0,11 | 0,08 | 0,07 | 0,04 |
| P50 | 2338 | 2,61 | 0,83 | 0,31 | 0,15 | 0,09 | 0,08 | 0,05 |
| BFE | 140 | 1,52 | 0,46 | 0,2 | 0,11 | 0,09 | 0,07 | 0,04 |
| T4000 | 140 | 1,36 | 0,45 | 0,19 | 0,09 | 0,08 | 0,06 | 0,04 |
| P50 | 140 | 2,01 | 0,6 | 0,25 | 0,13 | 0,11 | 0,06 | 0,05 |
| BFE | 2000 | 1,67 | 0,55 | 0,21 | 0,1 | 0,08 | 0,07 | 0,04 |
| T4000 | 2000 | 1,97 | 0,61 | 0,23 | 0,11 | 0,1 | 0,06 | 0,04 |
| P50 | 2000 | 2,28 | 0,7 | 0,28 | 0,14 | 0,1 | 0,08 | 0,05 |

Table 4 (Ring & Ball data; °C)
oil/resin ratio

| oil | resin | 30/70 | 40/60 | 50/50 | 60/40 | 65/45 | 70/30 | 80/20 |
|---|---|---|---|---|---|---|---|---|
| BFE | 2338 | 90,30 | 77,60 | 62,80 | 50,30 | 44,00 | 43,20 | 34,30 |
| T4000 | 2338 | 93,10 | 79,40 | 66,90 | 53,70 | 46,90 | 40,70 | 17,20 |

(continued)

oil/resin ratio

| oil | resin | 30/70 | 40/60 | 50/50 | 60/40 | 65/45 | 70/30 | 80/20 |
|-----|-------|-------|-------|-------|-------|-------|-------|-------|
| P50 | 2338 | 89,50 | 80,30 | 66,40 | 52,40 | 45,00 | 40,90 | 28,50 |
| BFE | 140 | 87,00 | 73,20 | 61,10 | 49,20 | 42,90 | 42,80 | 35,00 |
| T4000 | 140 | 94,00 | 80,90 | 64,90 | 52,30 | 43,80 | 40,00 | 27,40 |
| P50 | 140 | 94,70 | 80,90 | 63,00 | 51,00 | 45,40 | 40,00 | 31,30 |
| BFE | 2000 | 87,90 | 74,80 | 55,10 | 45,90 | 41,10 | 40,50 | 27,40 |
| T4000 | 2000 | 92,00 | 79,30 | 61,30 | 49,40 | 44,70 | 38,80 | 28,80 |
| P50 | 2000 | 90,10 | 77,60 | 59,90 | 48,60 | 42,70 | 38,30 | 26,50 |

Table 5 (PEN data; $10^{-1}$ mm)

oil/resin ratio

| oil | resin | 30/70 | 40/60 | 50/50 | 60/40 | 65/45 | 70/30 | 80/20 |
|-----|-------|-------|-------|-------|-------|-------|-------|-------|
| BFE | 2338 | 0,00 | 0,00 | 2,00 | 27,00 | 64,00 | 162,00 | 463,00 |
| T4000 | 2338 | 0,00 | 0,00 | 0,00 | 12,00 | 40,00 | 94,00 | 463,00 |
| P50 | 2338 | 0,00 | 0,00 | 0,70 | 20,00 | 54,00 | 118,00 | 463,00 |
| BFE | 140 | 0,00 | 0,00 | 4,00 | 32,00 | 90,00 | 202,00 | 463,00 |
| T4000 | 140 | 0,00 | 0,00 | 0,30 | 16,00 | 53,00 | 118,00 | 463,00 |
| P50 | 140 | 0,00 | 0,00 | 4,00 | 24,00 | 58,00 | 145,00 | 463,00 |
| BFE | 2000 | 0,00 | 0,00 | 10,00 | 87,00 | 201,00 | 229,00 | 463,00 |
| T4000 | 2000 | 0,00 | 0,00 | 3,00 | 31,00 | 59,00 | 155,00 | 463,00 |
| P50 | 2000 | 0,00 | 0,00 | 5,00 | 41,50 | 78,00 | 187,00 | 463,00 |

## Example 3

Anionic emulsions were prepared from the following oils and resins at a weight ratio of 70 : 30 (cf. Table 6). All emulsions contained about 48 wt.% of water. Emulsions 2 and 4 were very bright and clear and had an almost white appearance. The emulsions were produced on an Atomix II (computerised) apparatus (binder temperature: 140°C; water temperature: 50°C).

Table 6

| Emulsion No. | Oil | Resin |
|--------------|-----|-------|
| 1 | BFE | N2338 |
| 2 | T 4000 | N 2338 |
| 3 | BFE | NL 140 |
| 4 | T 4000 | NL 140 |

The emulsions were analysed for the following properties (cf. Table 7).

Table 7

| Emulsion No. | 1 | 2 | 3 | 4 |
|--------------|---|---|---|---|
| Water (wt.%) | 48.5 | 50.0 | 48.5 | 49.0 |
| pH | 12.4 | 12.5 | 12.4 | 12.5 |
| Viscosity ISO 4 (25°C) | - | 4'35" | 17" | 16" |
| Viscosity ISO 4 (25°C) after storage at 60°C for 48 h | 19" | 16" | 16" | 16" |

Emulsion 1 had a very high viscosity upon cooling to 25°C and was dilatant. Emulsion 2 also increased in viscosity but was slightly pseudoplastic. The viscosity increase for emulsion 1 was greater tan that of emulsion 2. Emulsions 3 and 4 retained a low viscosity.

**Claims**

1. Essential colourless binder composition comprising a naphthenic oil having a total content of naphthenics of 35 % - 80 % by weight, based on the total weight of the naphthenic oil, and a petroleum or synthetic hydrocarbon resin, wherein the ratio of the naphthenic oil and the petroleum or synthetic hydrocarbon resin is between 10 : 90 to 90 : 10, wherein the naphthenic oil has a colour of less than 100,000 APHA as determined according to ASTM 5386.

2. Essential colourless binder composition according to Claim 1, wherein the naphthenic oil has a total content of aromatics of less than 30 % by weight, based on the total weight of the naphthenic oil.

3. Essential colourless binder composition according to Claim 1 or Claim 2, wherein the naphthenic oil has a total content of aromatics of more than 1 % by weight, based on the total weight of the naphthenic oil.

4. Essential colourless binder composition according to any one of the preceding claims, wherein the petroleum or synthetic hydrocarbon resin is a petroleum resin.

5. Essential colourless binder composition according to Claim 4, wherein the petroleum resin is selected from the group consisting of resins manufactured by polymerisation of unsaturated hydrocarbons present in unsaturated petroleum fractions, coumarone-indene resins, hydrogenated petroleum resins, modified petroleum resins, cyclopentadiene-based resins, thermoplastics and terpene-based resins.

6. Essential colourless binder composition according to Claim 5, wherein the petroleum resin is a C5 - C9 petroleum resin, a C9 - petroleum resin or a C5 - petroleum resin.

7. Essential colourless binder composition according to any one of the preceding claims, wherein the naphthenic oil has a kinematic viscosity (100°C) of 20 - 150 cSt according to ASTM D 445.

8. Essential colourless binder composition according to any one of the preceding claims, wherein the essential colourless binder composition has a Ring & Ball softening point of at least 28°C according to ASTM E 28.

9. Essential colourless binder composition according to any one of the preceding claims, wherein the essential colourless binder composition has a PEN value of 1 - 500 ($10^{-1}$ mm at 25 °C) according to ASTM D 5.

10. Essential colourless binder composition according to claim 1, comprising a naphthenic oil having a total content of naphthenics of 35 % - 80 % by weight, based on the total weight of the naphthenic oil, and a petroleum or synthetic hydrocarbon resin, wherein the essential colourless binder composition has a ratio of the apparent Ring & Ball softening point of the naphthenic oil according to ASTM E 28 and the kinematic viscosity (100°C) of the napthenic oil according to ASTM D 445 of greater than 6.5 $°C.cSt^{-1}$, wherein the naphthenic oil has a colour of less than 100,000 APHA as determined according to ASTM 5386.

11. Use of an essential colourless binder composition according to any one of Claims 1 - 11 in a coloured asphalt composition.

12. Use of an essential colourless binder composition according to any one of Claims 1 - 11 in emulsions.

13. Coloured asphalt composition comprising 1 to 15 % by weight of an essential colourless binder composition according to any one of Claims 1 - 10.

14. Coloured asphalt composition according to Claim 13, further comprising a synthetic polymer.

15. Water-born emulsion having a water content of 23 - 75 wt. % wherein the nonaqueous part of the emulsion comprises at least 60 wt.% of the essential colourless binder composition according to any one of claims 1 - 10.

**Patentansprüche**

1. Im Wesentlichen farblose Bindemittelzusammensetzung, die ein naphthenisches Öl mit einem Gesamtgehalt an naphthenischen Verbindungen von 35 - 80 Gew.-%, bezogen auf das Gesamtgewicht des naphthenischen Öls, und ein Erdöl- oder synthetisches Kohlenwasserstoffharz umfasst, wobei das Verhältnis des naphthenischen Öls und des Erdöl- oder synthetischen Kohlenwasserstoffharzes zwischen 10 : 90 bis 90 : 10 liegt, wobei das naphthenische Öl eine Farbe von weniger als 100.000 APHA aufweist, wie bestimmt gemäß ASTM 5386.

2. Im Wesentlichen farblose Bindemittelzusammensetzung nach Anspruch 1, wobei das naphthenische Öl einen Gesamtgehalt an aromatischen Verbindungen von weniger als 30 Gew.-%, bezogen auf das Gesamtgewicht des naphthenischen Öls, besitzt.

3. Im Wesentlichen farblose Bindemittelzusammensetzung nach Anspruch 1 oder Anspruch 2, wobei das naphthenische Öl einen Gesamtgehalt von aromatischen Verbindungen von mehr als 1 Gew.-%, bezogen auf das Gesamtgewicht des naphthenischen Öls, besitzt.

4. Im Wesentlichen farblose Bindemittelzusammensetzung nach einem der vorangehenden Ansprüche, wobei das Erdöl- oder synthetische Kohlenwasserstoffharz ein Erdölharz ist.

5. Im Wesentlichen farblose Bindemittelzusammensetzung nach Anspruch 4, wobei das Erdölharz ausgewählt ist aus der Gruppe, bestehend aus Harzen, hergestellt durch Polymerisation von ungesättigten Kohlenwasserstoffen, die in ungesättigten Erdölfraktionen vorliegen, Cumaron-Inden-Harzen, hydrierten Erdölharzen, modifizierten Erdölharzen, Harzen auf Cyclopentadien-Basis, Thermoplasten und Harzen auf Terpen-Basis.

6. Im Wesentlichen farblose Bindemittelzusammensetzung nach Anspruch 5, wobei das Erdölharz ein C5-C9-Erdölharz, ein C9-Erdölharz oder ein C5-Erdölharz ist.

7. Im Wesentlichen farblose Bindemittelzusammensetzung nach einem der vorangehenden Ansprüche, wobei das naphthenische Öl eine kinematische Viskosität (100°C) von 20 - 150 cSt gemäß ASTM D 445 besitzt.

8. Im Wesentlichen farblose Bindemittelzusammensetzung nach einem der vorangehenden Ansprüche, wobei die im Wesentlichen farblose Bindemittelzusammensetzung einen Ring-Kugel-Erweichungspunkt von wenigstens 28°C gemäß ASTM E 28 besitzt.

9. Im Wesentlichen farblose Bindemittelzusammensetzung nach einem der vorangehenden Ansprüche, wobei die im Wesentlichen farblose Bindemittelzusammensetzung einen PEN-Wert von 1 - 500 ($10^{-1}$ mm bei 25°C) gemäß ASTM D 5 besitzt.

10. Im Wesentlichen farblose Bindemittelzusammensetzung nach Anspruch 1, die ein naphthenisches Öl mit einem Gesamtgehalt von naphthenischen Verbindungen von 35 - 80 Gew.-%, bezogen auf das Gesamtgewicht des naphthenischen Öls, und ein Erdöl- oder synthetisches Kohlenwasserstoffharz umfasst, wobei die im Wesentlichen farblose Bindemittelzusammensetzung ein Verhältnis des scheinbaren Ring-Kugel-Erweichungspunktes des naphthenischen Öls gemäß ASTM E 28 und der kinematischen Viskosität (100°C) des naphthenischen Öls gemäß ASTM D 445 von mehr als 6,5°C.cSt$^{-1}$ besitzt, wobei das naphthenische Öl eine Farbe von weniger als 100.000 APHA besitzt, wie bestimmt gemäß ASTM 5386.

11. Verwendung einer im Wesentlichen farblosen Bindemittelzusammensetzung nach einem der Ansprüche 1 - 10 in einer gefärbten Asphaltzusammensetzung.

12. Verwendung einer im Wesentlichen farblosen Bindemittelzusammensetzung nach einem der Ansprüche 1 - 10 in Emulsionen.

13. Gefärbte Asphaltzusammensetzung, die 1 bis 15 Gew.-% einer im Wesentlichen farblosen Bindemittelzusammensetzung nach einem der Ansprüche 1 - 10 umfasst.

14. Gefärbte Asphaltzusammensetzung nach Anspruch 13, die weiter ein synthetisches Polymer umfasst.

15. Emulsion auf Wasserbasis mit einem Wassergehalt von 23 - 75 Gew.-%, wobei der nicht-wässrige Teil der Emulsion wenigstens 60 Gew.-% der im Wesentlichen farblosen Bindemittelzusammensetzung nach einem der Ansprüche 1 - 10 umfasst.

**Revendications**

1. Composition de liant essentiellement incolore renfermant une huile naphténique ayant une teneur totale en composés naphténiques de 35 % - 80 % en poids par rapport au poids total de l'huile naphténique et une résine de pétrole ou une résine hydrocarburée synthétique, le rapport de l'huile naphténique et de la résine de pétrole ou de la résine hydrocarburée synthétique étant compris entre 10 : 90 et 90 : 10, étant précisé que l'huile naphténique a une couleur inférieure à 100.000 APHA déterminée selon ASTM 5386.

2. Composition de liant essentiellement incolore conforme à la revendication 1, dans laquelle l'huile naphténique a une teneur totale en composés aromatiques inférieure à 30 % en poids, par rapport au poids total de l'huile naphténique.

3. Composition de liant essentiellement incolore conforme à la revendication 1 ou à la revendication 2, dans laquelle l'huile naphténique a une teneur totale en composés aromatiques supérieure à 1 % en poids par rapport au poids total de l'huile naphténique.

4. Composition de liant essentiellement incolore conforme à l'une quelconque des revendications précédentes, dans laquelle la résine de pétrole ou la résine hydrocarburée synthétique est une résine de pétrole.

5. Composition de liant essentiellement incolore conforme à la revendication 4, dans laquelle la résine de pétrole est choisie dans le groupe formé par les résines obtenues par polymérisation d'hydrocarbures insaturés présents dans des fractions de pétrole insaturées, les résines coumarone-indène, les résines de pétrole hydrogénées, les résines de pétrole modifiées, les résines à base de cyclopentadiène et les résines thermoplastiques et à base de terpène.

6. Composition de liant essentiellement incolore conforme à la revendication 5, dans laquelle la résine de pétrole est une résine de pétrole en C5-C9, une résine de pétrole en C9, ou une résine de pétrole en C5.

7. Composition de liant essentiellement incolore conforme à l'une quelconque des revendications précédentes, dans laquelle l'huile naphténique a une viscosité cinématique (100°C) de 20-150 cSt selon ASTM D 445.

8. Composition de liant essentiellement incolore conforme à l'une quelconque des revendications précédentes, dans laquelle cette composition de liant essentiellement incolore à un point de ramollissement Bille & Anneau d'au moins 28°C selon ASTM E 28.

9. Composition de liant essentiellement incolore conforme à l'une quelconque des revendications précédentes, dans laquelle cette composition de liant essentiellement incolore a une pénétrabilité à l'aiguille PEN de 1-500 ($10^{-1}$ mm à 25°C) selon ASTM D 5.

10. Composition de liant essentiellement incolore conforme à la revendication 1, renfermant une huile naphténique ayant une teneur totale en composés naphténiques de 35 % - 80 % en poids par rapport au poids total de l'huile naphténique et une résine de pétrole ou une résine hydrocarburée synthétique, cette composition de liant essentiellement incolore ayant un rapport entre le point de ramollissement Bille & Anneau apparent de l'huile naphténique selon ASTM E 28 et la viscosité cinématique (100°C) de l'huile naphténique selon ASTM D 445 supérieur à 6,5°C cSt$^{-1}$, l'huile naphténique ayant une couleur inférieure à 100.000 APHA déterminée selon ASTM 5386.

11. Utilisation d'une composition de liant essentiellement incolore conforme à l'une quelconque des revendications 1-11 dans une composition d'asphalte colorée.

12. Utilisation d'une composition de liant essentiellement incolore conforme à l'une quelconque des revendications 1-11 dans des émulsions.

13. Composition d'asphalte colorée renfermant 1 à 15 % en poids d'une composition de liant essentiellement incolore conforme à l'une quelconque des revendications 1-10.

**14.** Composition d'asphalte colorée conforme à la revendication 13, renfermant en outre un polymère synthétique.

**15.** Emulsion à base d'eau ayant une teneur en eau de 23 - 75 % en poids, la partie non-aqueuse de cette émulsion renfermant au moins 60 % en poids de la composition de liant essentiellement incolore conforme à l'une quelconque des revendications 1 à 10.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1097794 A
- JP 6271790 A
- GB 1226234 B, Shell
- EP 179510 A, Shell
- US 4629754 A
- DE 3635283 A
- EP 330281 A, Shell
- US 5484477 A
- FR 2765229 A
- JP 2003020647 A, Showa Shell
- WO 03062315 A, Shell
- EP 1473327 A, Kraton Polymers B.V.
- JP 2002206047 A
- WO 2004096915 A

**Non-patent literature cited in the description**

- **KIRK-OTHMER.** Encyclopedia of Chemical Technology. 1991, vol. 13, 717-743